# EUROPÄISCHE PATENTSCHRIFT

(11) **EP 1 532 012 B1**
(45) Veröffentlichungstag und Bekanntmachung des Hinweises auf die Patenterteilung: **30.05.2007**
(21) Anmeldenummer: 03792298.6
(22) Anmeldetag: 12.08.2003
(51) Int. Cl.: B60H 1/00, F24F 13/12

(54) **ROLLBANDKASSETTE ZUR VERWENDUNG IN EINER STEUEREINRICHTUNG**
ROLLER BELT CASSETTE FOR USE IN A CONTROL DEVICE
COFFRET A BANDE ENROULEE S'UTILISANT DANS UN DISPOSITIF DE COMMANDE

(30) Priorität: 16.08.2002 DE 10238430
(43) Veröffentlichungstag der Anmeldung: 25.05.2005
(73) Patentinhaber: Behr GmbH & Co. KG, 70469 Stuttgart (DE)
(72) Erfinder: KLINGLER, Dietrich, 73540 Heubach (DE); SCHWAHN, Werner, 71701 Schwieberdingen (DE); OTTO, Jürgen, 75428 Illingen (DE)
(86) Internationale Anmeldenummer: PCT/EP2003/008916
(87) Internationale Veröffentlichungsnummer: WO 2004/018245

(56) Entgegenhaltungen:
- EP-B- 0 545 320
- DE-A- 2 343 074
- DE-A- 19 711 209
- US-A- 6 074 294
- PATENT ABSTRACTS OF JAPAN vol. 013, no. 296 (M-846), 10. Juli 1989 (1989-07-10) & JP 01 085809 A (NIPPON DENSO CO LTD), 30. März 1989 (1989-03-30)

## Beschreibung

Die Erfindung betrifft eine Rollbandkassette zur Verwendung in einer Steuereinrichtung, insbesondere für eine Heizungs- und/oder Klimaanlage, zum Steuern von Luftströmen in Kraftfahrzeugen nach dem Oberbegriff des Patentanspruches 1.

Die DE 44 42 000 A1 betrifft eine Steuereinrichtung für eine Heizungs- und/oder Klimaanlage, die als Jalousiekassette ausgeführt ist und in Luftkanäle einer Heizungs- und/oder Klimaanlage für ein Kraftfahrzeug eingesetzt wird. Die Steuereinrichtung regelt die Menge und auch die Richtung des durchtretenden Luftstromes. Die Steuereinrichtung wird durch einen Rahmen gebildet, in dem eine Vielzahl von schwenkbaren Lamellen angeordnet ist, die eine Klappenjalousie bilden. Durch Verschwenken der . Lamellen in einem Bereich von 0 bis 90° kann der Durchtrittsquerschnitt für den Luftstrom vollständig geschlossen, vollständig geöffnet oder teilweise frei gegeben werden, wobei auch die Richtung des Luftstromes durch die Stellung der Lamellen beeinflusst wird. Diese Jalousiekassette weist eine Vielzahl von Teilen auf, bedingt durch die Lamellenbauart und die damit verbundene Ansteuerung. Bei engen Luftspalten können Pfeifgeräusche auftreten und möglicherweise auch Klappergeräusche. Darüber hinaus weist eine solche Jalousiekassette einen relativ hohen Luftwiderstand, d. h. Druckabfall auf.

In der DE 35 14 358 A1 wurde bereits vorgeschlagen, herkömmliche Klappen zu Steuerung der Luftströme in einer Heizungs- und/oder Klimaanlage durch eine so genannte Rolljalousie zu ersetzen. Letztere besteht aus einem Rollband, welches teilweise mit Ausschnitten versehen ist und die Durchtrittsöffnungen von Luftströmungskanälen schließt oder teilweise bzw. vollständig frei gibt. Das Rollband wird über einzelne Walzen geführt, auf- und abgewickelt sowie mittels eines Stellmotors über eine Antriebswalze in Schließ-, Öffnungs- oder Zwischenstellung gebracht.

Eine Weiterentwicklung einer solchen Rolljalousie wurde durch die EP 0 705 725 A1 bekannt. Dort wird ein filmartiges Rollband, welches, über seine Länge verteilt, eine Vielzahl von unterschiedlichen Ausschnitten für den Durchtritt eines Luftstromes aufweist, an den Austrittsöffnungen des Klimaanlagengehäuses vorbei geführt und kontrolliert somit den Austrittsquerschnitt für die Luft. In einer weiteren Anwendung ist ein solches Rollband unmittelbar vor dem Heizkörper angeordnet und steuert die durch den Heizkörper hindurchtretende Luftmenge sowie den den Heizkörper umströmenden Bypassstrom. Diese Art von Rolljalousien ist jeweils an die speziellen Einbauverhältnisse und Konfigurationen einer speziellen Heizungs- und/oder Klimaanlage angepasst.

JP 01085809 offenbart eine Rollbandkassette gemäß dem Oberbegriff des Anspruchs 1.

Es ist Aufgabe der vorliegenden Erfindung eine Rollbandkassette für eine Steuereinrichtung, insbesondere für eine Heizungs- und/oder Klimaanlage, zu verbessern

Diese Aufgabe wird erfindungsgemäß durch die Merkmale des Anspruchs 1 gelöst. Die abhängigen Ansprüche betreffen vorteilhafte Aus- und Weiterbildungen der Erfindung.

Erfindungsgemäß ist eine Rollbandkassette zur Verwendung in einer Steuereinrichtung zum Steuern von Luftströmen in Kraftfahrzeugen, bestehend aus einer Rollbandbaugruppe mit einer von einem Rollband gebildeten Rolljalousie und mindestens zwei Wellen, wobei eine Welle eine Antriebswelle und eine Welle eine Umlenkwelle ist, vorgesehen, bei der das Rollband durch ein endloses Band gebildet ist oder in Art eines endlosen Bandes ausgebildet ist. Das Rollband der Rolljalousie ist dabei derart ausgebildet, dass es in Art eines Endlosbandes beide Wellen in sich aufnimmt. Dabei ist an der Antriebswelle eine feste Verbindung zwischen Rollband und Welle vorgesehen, indem das Rollband, in Längsrichtung der Welle verlaufend eingeklemmt ist.

Erfindungsgemäß ist die Rolljalousie fest mit der Antriebswelle verbunden, wobei die Antriebswelle mindestens zwei Teile umfasst, zwischen denen die Rolljalousie eingeklemmt ist, wobei die beiden Teile mittels einer Verclipsung oder einer Arretierung miteinander verbunden sind. Bevorzugt sind hierbei die beiden Teile der Antriebswelle über einen Verbindungssteg miteinander flexibel verbunden. Dabei kann der Verbindungssteg durch einen Spritzkanal gebildet sein, so dass die beiden Teile in einer Form hergestellt werden können und miteinander flexibel verbunden sind.

Bevorzugt weist zumindest einer der beiden Teile der Antriebswelle als Fixierstifte dienende Vorsprünge auf, welche in im Rollband vorgesehene Löcher eingreifen. Dies ermöglicht eine einfache und sichere Positionierung und Fixierung.

Gemäß einer bevorzugten Ausführungsform ist das Rollband zumindest bereichsweise mehrschichtig ausgebildet. Dabei ist insbesondere eine Aluminiumschicht vorgesehen, gegebenenfalls auch nur in einem Teil des Rollbandes.

Bei einer besonders vorteilhaften Ausführungsform der Erfindung ist die Rolljalousie als endloses Rollband mit Aussparungen zur Freigabe der mindestens einen Durchtrittsöffnung ausgebildet.

Bei einer bevorzugten Ausführungsform wird das Rollband zweilagig an der mindestens einen Durchtrittsöffnung vorbeigeführt, wobei die Aussparungen auf dem Rollband so verteilt sind, dass bei einer geschlossenen Durchtrittsöffnung jeweils eine Lage des Rollbandes etwa die Hälfte der Druchtrittsöffnung verdeckt, wobei beim Öffnen der Durchtrittsöffnung sich die beiden Lagen des Rollbandes in entgegengesetzter Richtung bewegen und die Durchtrittsöffnung von der Mitte nach außen freigeben. Durch die Zweilagigkeit wird in vorteilhafter Weise ein Flattern des Bandes vermieden und dadurch die Geräuschentwicklung reduziert. Durch die beschriebene Art der Freigabe der Durchtrittsöffnung wird nur der halbe Betätigungsweg zum Öffnen oder Schließen der Durchtrittsöffnung benötigt.

Die Antriebswelle wird mittels eines Stellmotors, der beispielsweise direkt am Rahmen angeflanscht ist oder über einen Bowdenzug oder eine biegsame Welle angetrieben. Bei einer anderen Ausführungsform ist der Stellmotor in die als Hohlwelle ausgebildete Antriebswelle integriert.

Die bisher beschriebene Steuereinrichtung wird vorzugsweise in Heizungs- oder Klimaanlagen für Kraftfahrzeug eingesetzt.

Ausführungsbeispiele der Erfindung sind in der Zeichnung dargestellt und werden im Folgenden näher beschrieben. Es zeigen:
- Fig. 1a-d: eine bekannte Steuereinrichtung mit Rolljalousie zum Verändern von einem Durchtrittsquerschnitt;
- Fig. 2a-d: eine bekannte Steuereinrichtung mit Rolljalousie zum Verändern von zwei Durchtrittsquerschnitten;
- Fig. 3: Schnittdarstellung der bekannten Steuereinrichtung gemäß Fig. 1b;
- Fig. 4: Schnittdarstellung der bekannten Steuereinrichtung gemäß Fig. 2b;
- Fig. 5a-b: Schnittdarstellung des Bereichs der bekannten Umlenkwelle gemäß Fig. 1 b bzw. 2b;
- Fig. 6a-b: Schnittdarstellung einer erfindungsgemäßen Antriebswelle mit Rollband;
- Fig. 7a-c: in schematischer Darstellung verschiedene Rollbänder;
- Fig. 8: einen vergrößerten Ausschnitt einer erfindungsgemäßen Antriebswelle mit Rollband;
- Fig. 9a-c: Schnittdarstellung einer erfindungsgemäßen Steuereinrichtung;
- Fig. 10a-c: Steuereinrichtung nach Fig. 2;
- Fig. 11: eine alternative Ausführungsform einer bekannten Steuereinrichtung zum Steuern von zwei Luftströmen;
- Fig. 12a-d: eine alternative Ausführungsform einer bekannten Steuereinrichtung;
- Fig. 13a-c: eine weitere Ausführungsform, einer erfindungsgemäßen Antriebswelle und
- Fig. 14a-c: Schnitte durch verschiedene Rollbänder.

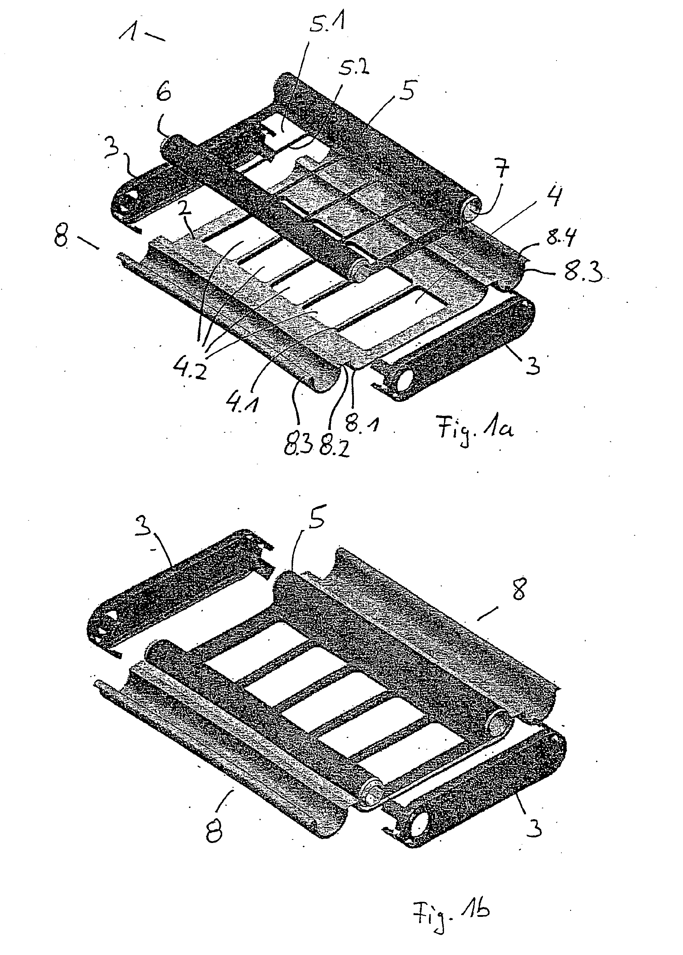

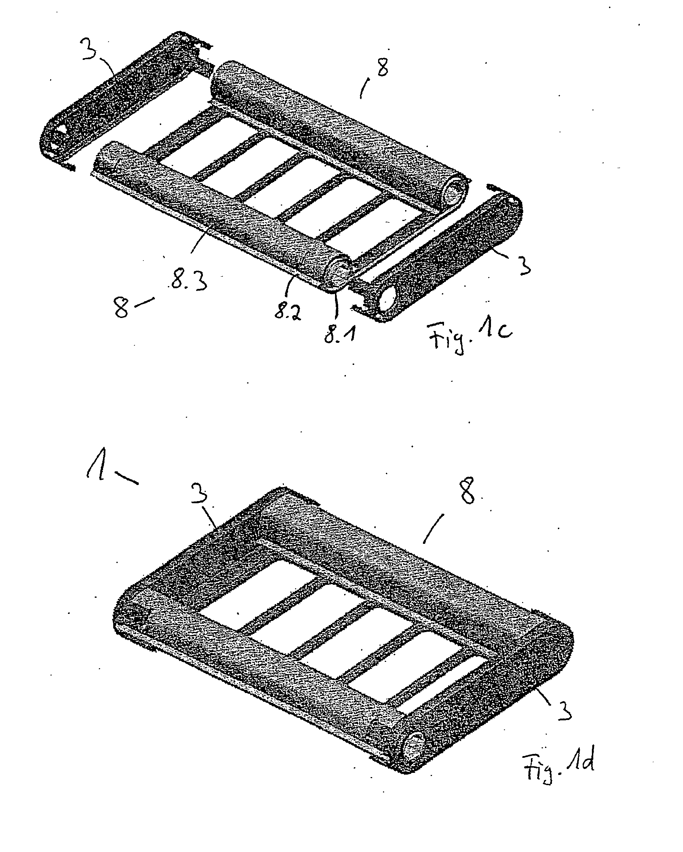

**Fig. 1** zeigt eine bekannte Steuereinrichtung 1, mit einem Rahmen, welcher ein Gehäuse 2 und zwei Seitenteile 3 umfaßt. Das Gehäuse umschließt eine Durchtrittsöffnung 4, die durch Gitterstäbe 4.1 in mehrere Fenster 4.2 unterteilt ist. Diese parallel angeordneten Gitterstäbe 14 dienen der Festigkeit des Gehäuses 3 und auch der Ausrichtung der durchtretenden Luftströmung. An den Längsseiten ist im dargestellten Ausführungsbeispiel an das Gehäuse 2 jeweils ein Unterteil 8.1 eines an einer Längsseite offenen Hohlkörpers 8 angeformt, wobei im dargestellten Ausführungsbeispiel der Hohlkörper als Hohlzylinder ausgeführt ist, und wobei die beiden Hohlkörper 8 entweder eine Antriebswelle 6 oder eine Umlenkwelle 7 aufnehmen. Über ein bewegliches Element 8.2 ist ein Oberteil 8.3 schwenkbar mit dem Unterteil 8.1 verbunden. Bei geöffnetem Hohlkörper kann die Rollbandbaugruppe bestehend aus einem Rollband 5, der Antriebswelle 6 und der Umlenkwelle 7 einfach von oben in das Gehäuse 2 eingelegt werden. Danach wird das Oberteil 8.3 auf das Unterteil geschwenkt und das Gehäuse 3 an seinen Querseiten durch die Seitenteile 3 geschlossen.

Die Steuermittel zum Verändern des Durchtrittsquerschnittes der Durchtrittsöffnung umfassen das endlose Rollband 5, die Antriebswelle 6 und die Umlenkwelle 7. Die Antriebswelle 6 und die Umlenkwelle 7 sind mit nicht näher dargestellten stirnseitigen Zapfen oder Hohlzapfen in entsprechenden Lagerstellen der Seitenteile 8, 9 drehbar gelagert. Über den Umfang der Antriebswelle 6 und der Umlenkwelle 7 ist das Rollband 2 geführt. Das Rollband 2 weist Ausschnitte 5.1 auf, die hinsichtlich ihrer Querschnitte dem der Fensters 4.2 im Gehäuse 2 entsprechen. Die Ausschnitte 5.1 sind durch einzelne schmale Streifen 5.2 unterteilt, damit in dem Rollband 2 die erforderliche Zugspannung über die gesamte Breite aufrechterhalten und eine dichte Anlage des Rollbandes 2 an die beiden Wellen 6 und 7 gewährleistet ist.

Fig. 1a bis 1d zeigen die Einzelteile der Steuereinrichtung 1 und den Ablauf beim Zusammenbau der Steuereinrichtung 1. Fig. 1a zeigt das Gehäuse 3 mit aufgeschwenkten Oberteil 8.3 des Hohlkörpers 8.

Fig. 1b zeigt das Gehäuse mit eingelegter Rollbandbaugruppe, wobei in die beiden Unterteile 8.1 der Hohlkörper die Antriebswelle bzw. die Umlenkwelle eingelegt ist.

Fig. 1c zeigt das Gehäuse mit geschlossenem Hohlkörper, d. h. das Oberteil 8.3 wurde über das bewegliche Element, welches im dargestellten Ausführungsbeispiel als Filmschanier ausgeführt ist, auf das Unterteil geschwenkt, wodurch der Hohlkörper 8 bis auf einen Längsschlitz 8.4, durch den das Rollband 5 geführt ist, geschlossen ist.

Fig. 1d zeigt die Steuereinrichtung mit durch die Seitenteile 3 geschlossenem Gehäuse 2.

Die beschriebene Steuereinrichtung wird in eine hier nicht dargestellte Heizungs- und/oder Klimaanlage für ein Kraftfahrzeug eingesetzt, wobei die Steuereinrichtung hinsichtlich ihrer Außenabmessungen an den jeweiligen Luftströmungskanal angepasst ist, so dass der gesamte Luftströmungsquerschnitt durch die Kassette kontrolliert werden kann. Im dargestellten Ausführungsbeispiel ist der Durchtrittsquerschnitt einer Durchtrittsöffnung 4 mit fünf Fenstern 4.2 steuerbar.

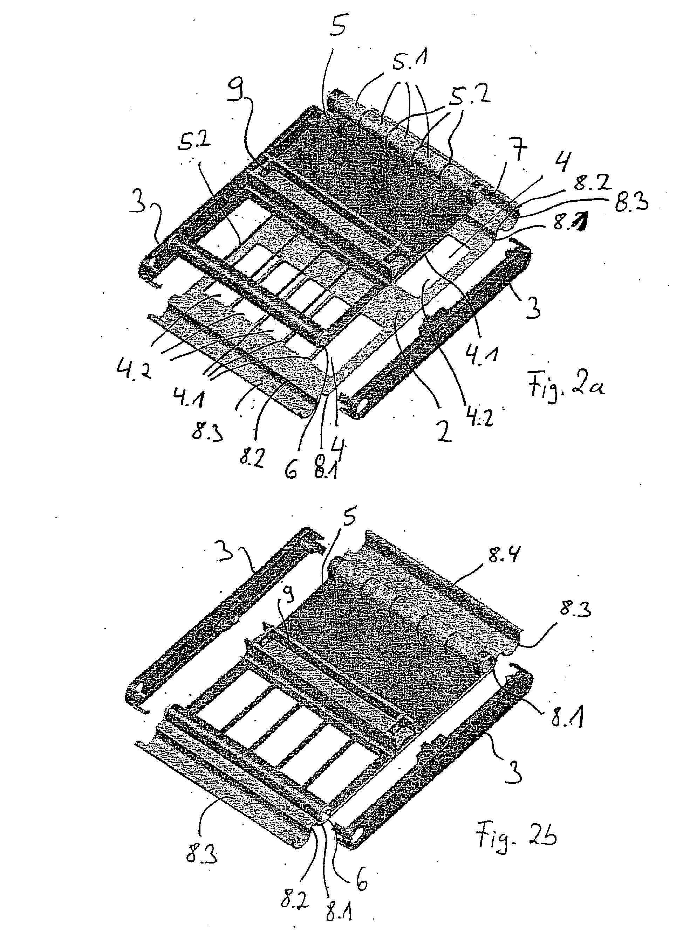

**Fig. 2** zeigt eine bekannte Steuereinrichtung 1 mit einem Rahmen, welcher ein Gehäuse 2 und zwei Seitenteile 3 umfaßt. Im Gegensatz zum Ausführungsbeispiel in Fig. 1 umschließt das Gehäuse hier zwei Durchtrittsöffnungen 4, die durch Gitterstäbe 4.1 in mehrere Fenster 4.2 unterteilt sind. Wie aus der Fig. 2 ersichtlich ist, umfaßt die Steuereinrichtung analog zur Steuereinrichtung nach Fig. 1 ebenfalls ein Gehäuse 2 mit angeformten Hohlkörpern 8 zur Aufnahme der Antriebswelle 6 bzw. der Umlenkwelle 7, zwei Seitenteile 3 und ein Rollband 5. Zusätzlich ist zwischen den beiden Durchtrittsöffnungen 4 eine Abstützeinrichtung 9 zur zusätzlichen Führung des Rollbandes 5 angeordnet. Im dargestellten Ausführungsbeispiel ist der Durchtrittsquerschnitt von zwei Durchtrittsöffnungen 4 steuerbar. Die Darstellung zeigt eine erste Ausgangsposition, bei der die linke Durchtrittsöffnung vollständig geöffnet und die rechte Durchtrittsöffnung vollständig geschlossen ist:

Fig. 2a bis 2d zeigen die Einzelteile der Steuereinrichtung 1 zur Steuerung von zwei Durchtrittsöffnungen und den Ablauf beim Zusammenbau der Steuereinrichtung 1. Fig. 2a zeigt das Gehäuse 3 mit aufgeschwenkten Oberteil 8.3 des Hohlkörpers 8.

Fig. 2b zeigt das Gehäuse mit eingelegter Rollbandbaugruppe (Rollband 5, Antriebswelle 6, Umlenkwelle 7) und zwischen den Durchtrittsöffnungen 4 aufgelegter Abstützeinrichtung 9, wobei in die beiden Unterteile 8.1 der Hohlkörper 8 die Antriebswelle 6 bzw. die Umlenkwelle 7 eingelegt ist.

Fig. 2c zeigt das Gehäuse 2 mit geschlossenem Hohlkörper 8, d. h. das Oberteil 8.3 wurde über das bewegliche Element 8.2, welches im dargestellten Ausführungsbeispiel als Filmschanier ausgeführt ist, auf das Unterteil 8.1 geschwenkt, wodurch der Hohlkörper 8 bis auf einen Längsschlitz 8.4, durch den das Rollband 5 geführt ist geschlossen ist.

Fig. 2d zeigt die Steuereinrichtung mit durch die Seitenteile 3 geschlossenem Gehäuse 2, wobei die Abstützeinrichtung 9 ebenfalls mit den Seitenteilen verbunden, beispielsweise verclipst ist.

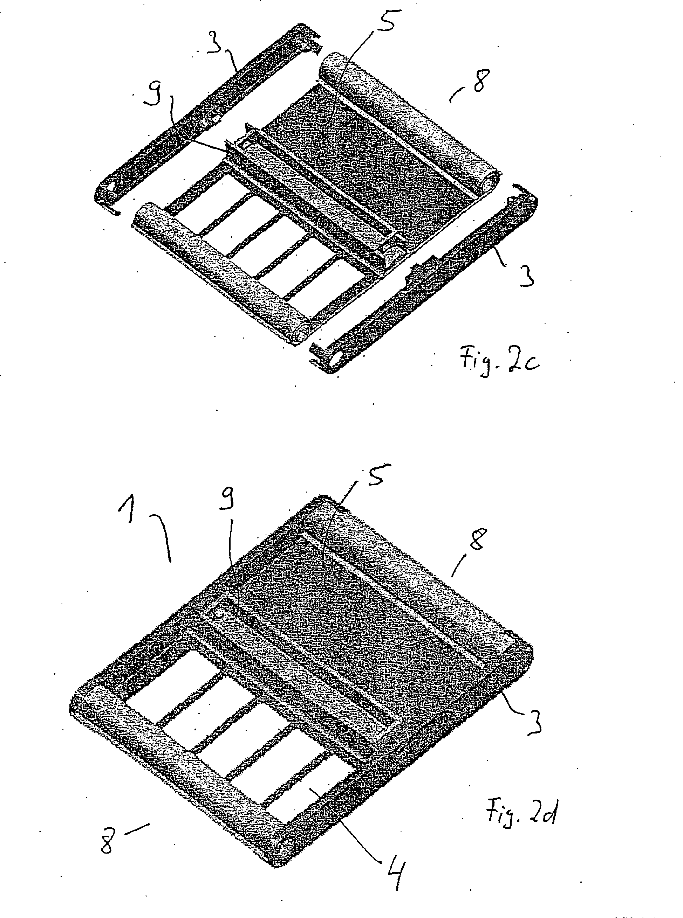

**Fig. 3** zeigt eine Schnittdarstellung der bekannten Steuereinrichtung 1 gemäß Fig. 1b ohne Rollband 5, zur Darstellung der Schwenkbewegung 8.6 des Oberteils 8.3 des Hohlkörpers 8 um die Schwenkachse 8.7, die etwa mittig durch das bewegbare Element 8.2 verläuft. Wie aus Fig. 3 ersichtlich ist, ist an das offene Ende des Oberteils 8.3 eine Nase 8.4 angeformt, wobei die Nase bei geschlossenem Hohlkörper 8 die Führung des Rollbandes 5 erleichtert.

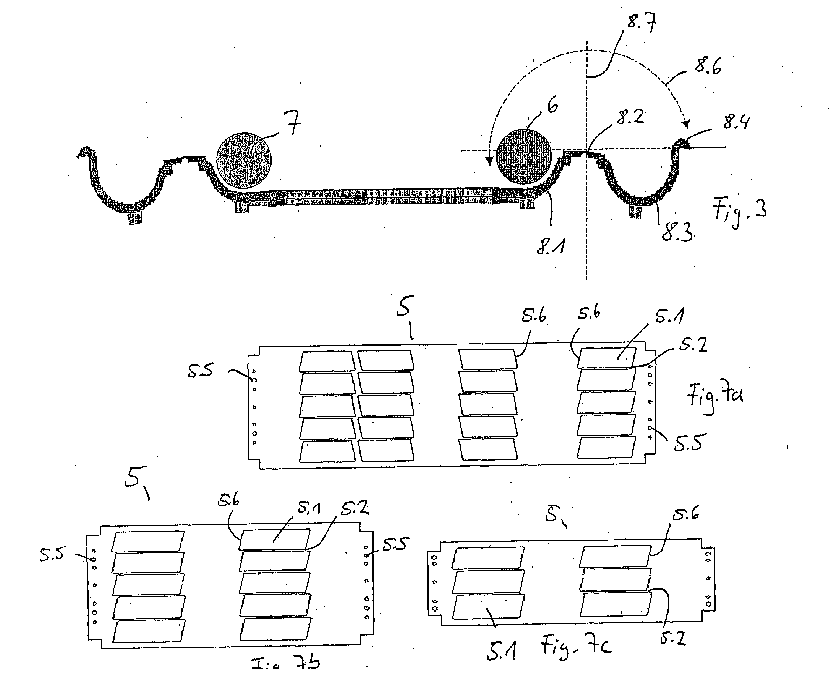

**Fig. 4** zeigt eine Schnittdarstellung der bekannten Steuereinrichtung 1 gemäß Fig. 2b mit eingelegter Rollbandbaugruppe (Rollband 5, Antriebswelle 6, Umlenkwelle 7) und aufgesetzter Abstützeinrichtung 9.

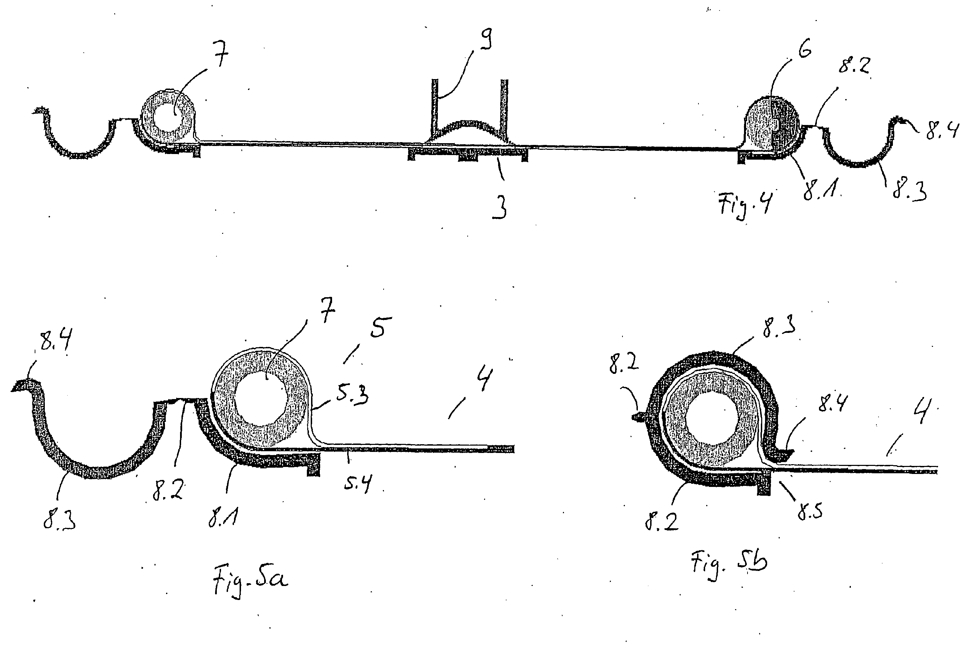

**Fig. 5** zeigt einen Schnitt durch den Bereich der Umlenkwelle 7 gemäß Fig. 1b bzw. 2b. Fig. 5a zeigt den Bereich mit der ins Gehäuse 2 eingelegten Rollbandbaugruppe und mit geöffnetem Hohlkörper. Fig. 5b zeigt den Bereich mit der ins Gehäuse 2 eingelegten Rollbandbaugruppe und mit geschlossenem Hohlkörper 8. Wie aus Fig. 5 ersichtlich ist, wird das Rollband 5 in zwei Lagen 5.3, 5.4 über die Durchtrittsöffnungen 4 geführt. Die an das Oberteil 8.3 des Hohlkörpers angeformte Nase 8.4 erleichtert die Führung des Rollbandes 5 durch die Längsöffnung 8.5 des Hohlkörpers 8.

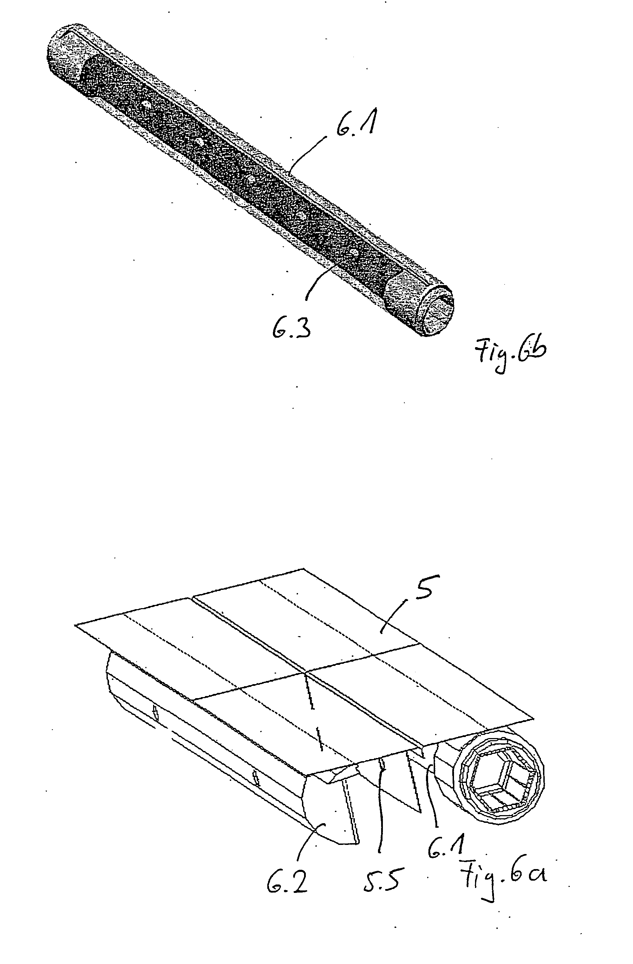

**Fig. 6** zeigt eine erfindungsgemäße schematische Darstellung der Verbindung des Rollbandes 5 mit der Antriebswelle 6. Wie aus der Fig. 6a ersichtlich ist, umfaßt die Antriebswelle 6 ein Unterteil 6.1 und ein Oberteil 6.2, wobei das Oberteil 6.2 mittels einer Clipsverbindung 6.3 mit dem Unterteil 6.1 verbindbar ist. Zur Verbindung mit der Antriebswelle 6 weist das Rollband an seinen Enden beispielsweise Löcher 5.5 auf, durch die es auf dem Unterteil 6.1 der Antriebswelle 6 fixiert ist. Bei der Verclipsung des Oberteils 6.2 mit dem Unterteil 6.1 wird das Rollband dann geklemmt und dadurch mit der Antriebswelle fest verbunden. Zur Verdeutlichung zeigt Fig. 6b eine Darstellung des Unterteils 6.1 der Antriebswelle 6 mit den entsprechenden Clipsen 6.3 für die Clipsverbindung mit dem Oberteil 6.2.

**Fig. 7** zeigt in schematischer Darstellung verschiedene Rollbänder 5. So zeigt Fig. 7a eine Rollband 5 zum Steuern von zwei Durchtrittsöffnungen. Das Rollband 5 weist Ausschnitte 5.1 auf, die hinsichtlich ihrer Querschnitte dem der Fensters 4.2 im Gehäuse 2 entsprechen. Die Ausschnitte 5.1 sind durch einzelne schmale Streifen 5.2 unterteilt. Die Ränder 5.6 der Ausschnitte sind vorzugsweise angeschrägt, um ein problemloses Übereinanderlaufen der beiden Rollbandlagen sicherzustellen. An den beiden Enden weist das Rollband 5 Löcher 5.5 zur Befestigung mit der Antriebswelle 6 auf. Fig. 7b und 7c zeigen Rollbänder zur Steuern von einer Durchtrittsöffnung mit einer unterschiedlichen Anzahl von Fenstern 4.1.

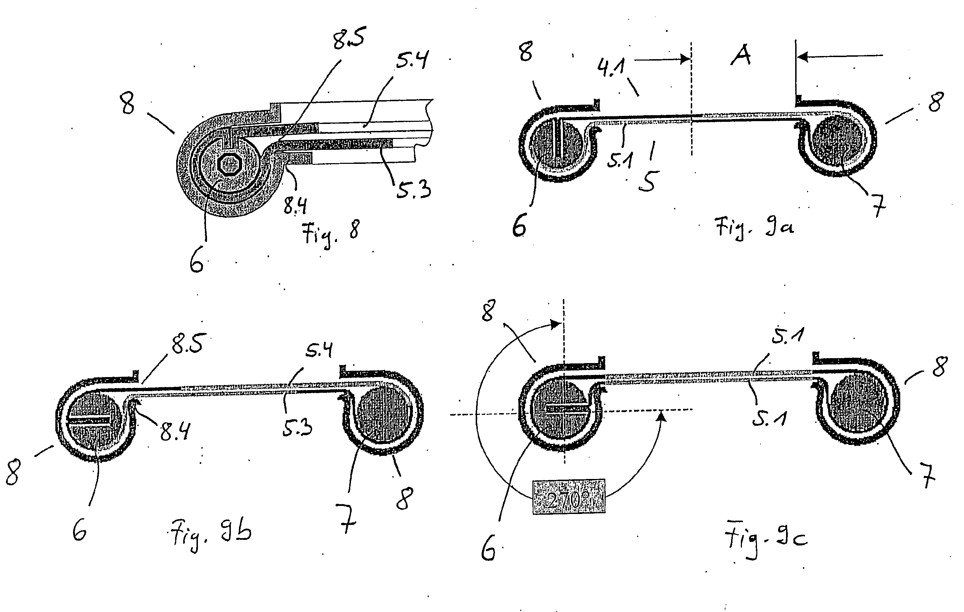

**Fig. 8** zeigt einen vergrößerten Ausschnitt des erfindungsgemäßen Rollbandes 5 im Bereich der Antriebswelle 6. Wie aus der Fig. 8 ersichtlich ist, ist das Rollband 5 an seinen beiden Enden fest mit der Antriebswelle 6 verbunden. Durch die Ausführung des Rollbandes 5 als endloses Band bildet sich eine obere Lage 5:4 und eine unteren Lage 5:3, die sich bei einer Drehung der Antriebswelle 6 gegeneinander bewegen. Durch eine geeignete Anordnung von Ausschnitten ist es daher möglich, die Durchtrittsöffnungen von der Mitte der Durchtrittsöffnung nach Außen zu öffnen bzw. von Außen zur Mitte zu schließen. Die Antriebswelle 6 befindet sich in dem Hohlkörper 8 des Gehäuses 3, wobei der Hohlkörper 8 in Richtung Gehäusemitte einen Schlitz 8.5 aufweist. Das Oberteil 8.3 des Hohlkörpers 8 läuft in eine federnd ausgebildete Nase oder Zunge 8.4 mit einem Radius R aus, oberhalb welcher das Rollband 5 in den Hohlkörper 8 eingeführt und wieder hinausgeführt wird. Das endlose Rollband 5 weist eine obere Lage 5.4 und eine untere Lage 5.3 auf, die sich gegenläufig zueinander bewegen. Das Rollband 5 umschlingt ca. ¾ des Umfanges der Antriebswelle 6 und wird durch die federnde Zunge 8.4 gespannt. Die Zunge 8.4 ersetzt somit eine Spannrolle.

Als weitere Möglichkeiten für die Verbindung des Rollbandes 5 mit der Antriebswelle 6, kann das Rollband 5 auch mit seinen beiden Enden an der Antriebswelle 6 befestigt sein, indem die Rollbandenden in Längsrichtung der Antriebswelle 6 mit dieser verschweißt werden. Der Verstellweg für das Rollband ist bei den beschriebenen Befestigungen mit der Antriebswelle vom Umfang der Antriebswelle bzw. vom Umschlingungswinkel abhängig.

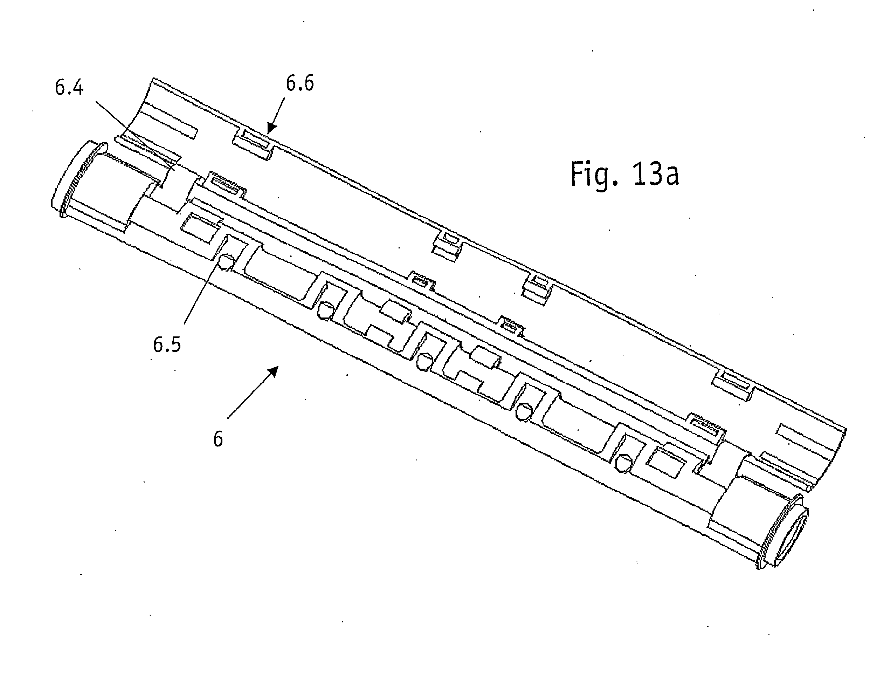

Unter Bezugnahme auf die **Fig. 13a bis 13c** wird eine weitere Möglichkeit für die Verbindung des Rollbandes 5 mit der Antriebswelle 6 näher erläutert. Dabei ist die Antriebswelle 6 zweiteilig mit einem Unterteil 6.1 und einem Oberteil 6.2 ausgestaltet, wobei die beiden Teile 6.1 und 6.2 über zwei Verbindungsstege 6.4 einstückig miteinander verbunden sind, welche prinzipiell eine Art Scharnierfunktion haben. Die Verbindungsstege 6.4 weisen einen im Wesentlichen rechteckförmigen Querschnitt von 0,5 mm x 2 mm auf und werden durch Spritzkanäle gebildet, wobei etwa mittig eine Knickstelle vorgesehen ist. Dabei sind die Verbindungsstege 6.4 derart ausgebildet, dass sie beim Zusammenklappen der beiden Teile 6.1 und 6.2 im Inneren der Antriebswelle 6 angeordnet sind.

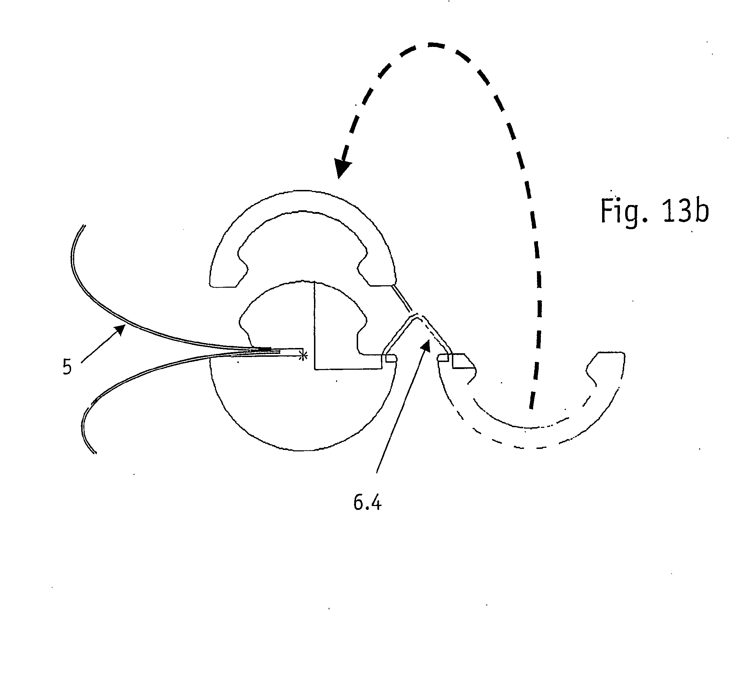

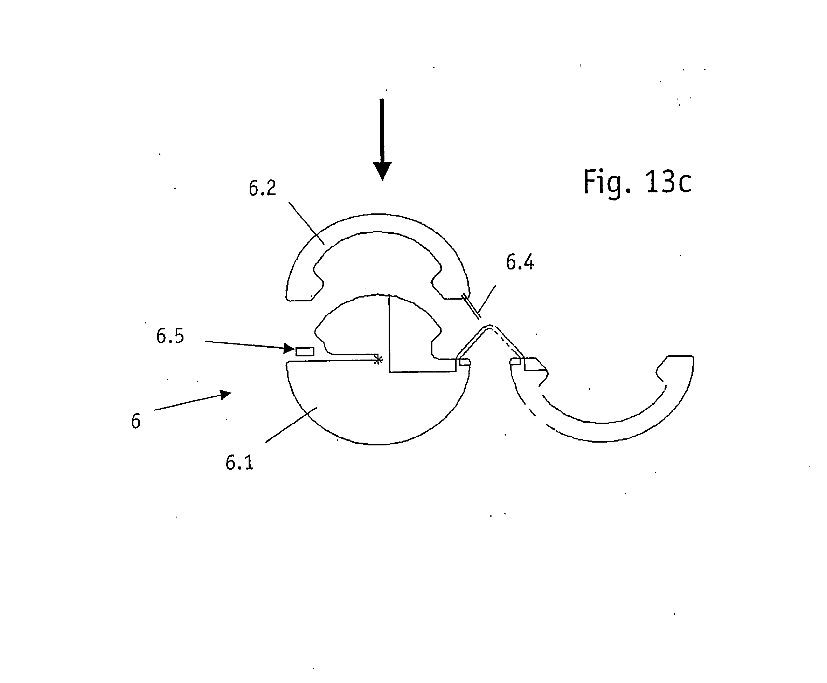

Das Rollband 5 wird mittels Fixierstiften 6.5 im Prinzip auf die o.g. Weise positioniert und mittels Schnapphaken 6.6 (Clipsverbindung) zwischen die beiden Teile 6.1 und 6.2 eingeklemmt. Das Verbinden der beiden Teile 6.1 und 6.2 erfolgt, wie aus Fig. 13b und Fig. 13c ersichtlich (siehe entsprechende Pfeile in den Figuren), mittels einer kombinierten Schwenk-Längs-Bewegung, wobei zum Verclipsen im Wesentlichen eine Längsbewegung erfolgt (vgl. Fig. 13c). In Hinblick auf die Ausgestaltung des Rollbandes 5 sei auf Figuren 7a bis 7c verwiesen, insbesondere in Hinblick auf die Löcher 5.5 an den beiden Rändern desselben.

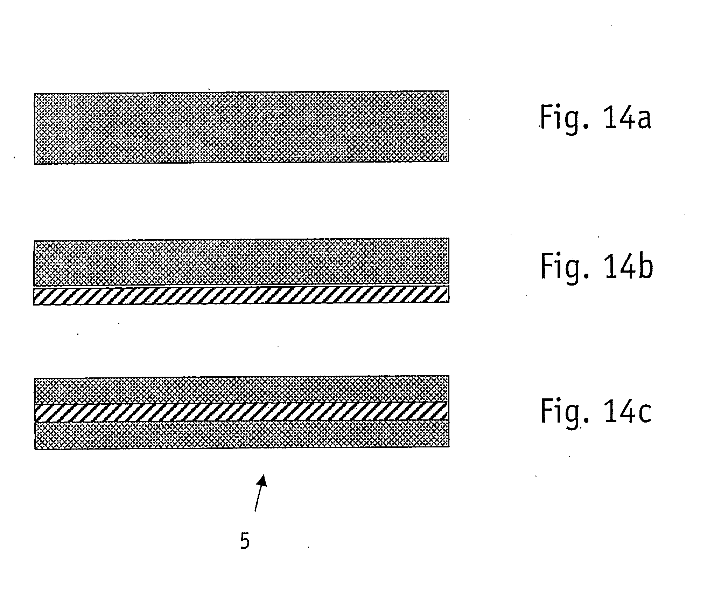

Das Rollband 5 kann eine einschichtige Folie (Monofolie) sein, wie in **Fig. 14a** dargestellt. Insbesondere in Hinblick auf einen geringen Wärmedurchlass ist eine Aluminium-Folie oder eine mehrlagige Folie mit einer Aluminium-Schicht, wie in **Fig. 14b und 14c** dargestellt, besonders geeignet. Die Aluminium-Schicht kann beispielsweise aufgedampft oder aufgeklebt, gegebenenfalls auch nur in einem Bereich des Rollbandes, sein. Das Rollband 5 besteht insbesondere aus einem gut gleitfähigen, abriebfesten Material, das temperaturbeständig in einem Bereich von -40°C bis 100°C ist. Ferner sollte das Rollband geräuscharm und wasserabweisend sein. Die Schichtdicken können dabei unterschiedlich sein.

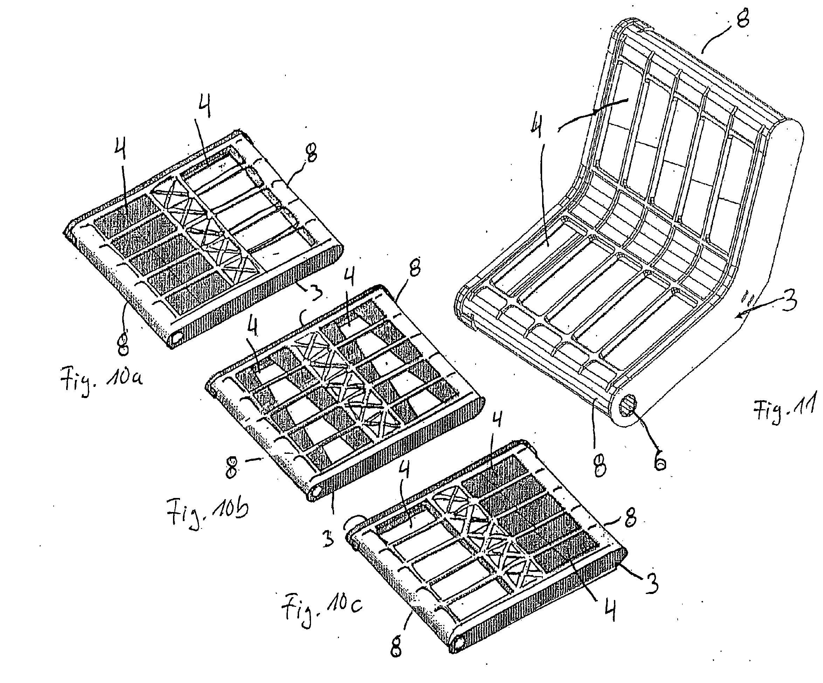

**Fig. 9a bis 9c** zeigen eine Schnittdarstellung der Steuereinrichtung nach Fig. 1 beim Übergang von einer ersten Ausgangslage (Durchtrittsöffnung geschlossen) in eine zweite Ausgangslage (Durchtrittsöffnung geöffnet) über eine Zwischenlage (Durchtrittsöffnung teilweise geöffnet). Wie aus der Fig. 9 ersichtlich ist, benötigt das Rollband 5 durch die Benutzung der beiden Lagen 5.3, 5.4 des Rollbandes 5 einen kürzeren Verstellweg, um die Durchtrittsöffnung von der geschlossenen Ausgangsstellung in die geöffnete Ausgangsstellung zu bringen, da jede Lage nur um einen Verstellweg, der etwa der halben Breite Ader Durchtrittsöffnung 4 entspricht, bewegt werden muß. Die Antriebswelle muß zu diesem Zweck um einen Winkel von etwa 270° weitergedreht werden. Daraus ergibt sich, dass bei dem dargestellten Ausführungsbeispiel ¾ des Umfangs der Antriebswelle bzw. der Umlenkwelle in etwa der halben Breite A der Durchtrittsöffnung entspricht.

**Fig. 10a bis 10c** zeigen die Steuereinrichtung nach Fig. 2 beim Übergang von einer ersten Ausgangslage (linke Durchtrittsöffnung geöffnet, rechte Durchtrittsöffnung geschlossen) in eine zweite Ausgangslage (linke Durchtrittsöffnung geschlossen, rechte Durchtrittsöffnung geöffnet) über eine Zwischenlage (beide Durchtrittsöffnung teilweise geöffnet). Wie aus der Fig. 10 ersichtlich ist, werden geöffnete Fenster von Außen zur Mitte geschlossen und geschlossene Fenster von der Mitte nach Außen geöffnet.

**Fig. 11** zeigt eine Ausführungsform einer bekannten Steuereinrichtung zum Steuern von zwei Luftströmen, die in einem vorgegebenen Winkel zueinander verlaufen. Zu diesem Zweck sind die beiden Durchtrittsöffnungen in dem vorgegebenen Winkel zueinander angeordnet. Der Winkel wird durch eine entsprechende Ausführung des Bereiches zwischen den beiden Durchtrittsöffnungen erreicht.

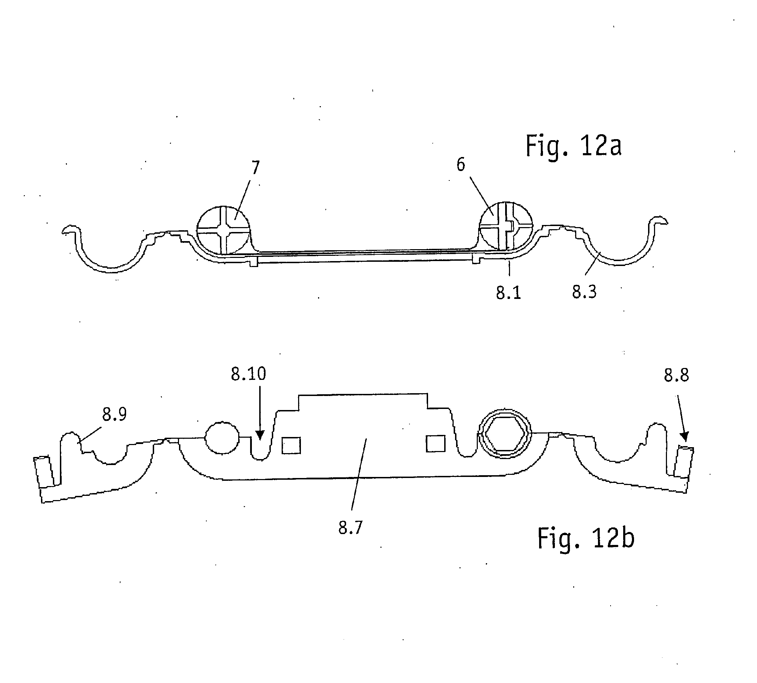

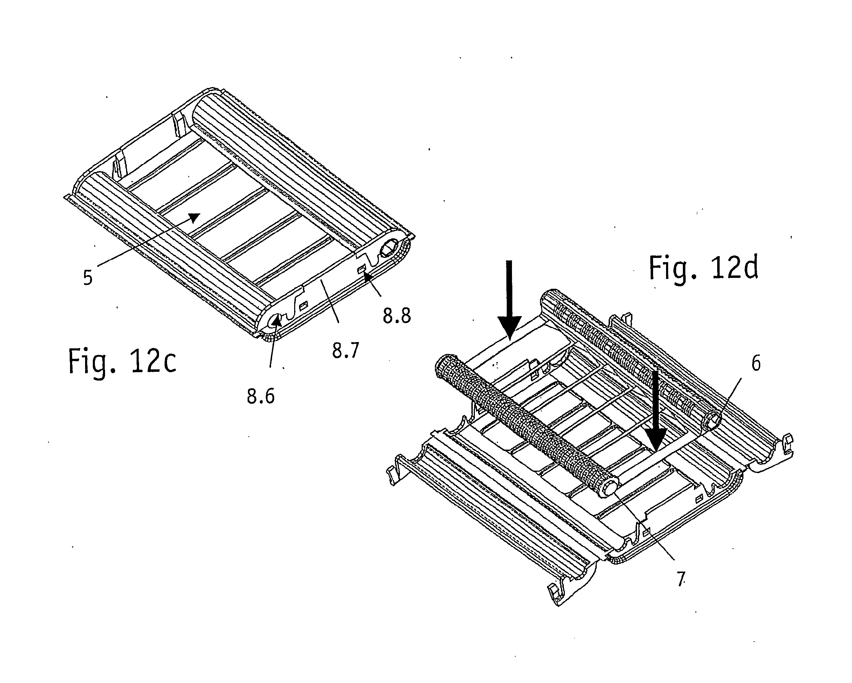

**Fig. 12a bis 12d** zeigen eine bekannte Rollbandkassette bei der in die Hohlkörper 8 integriert Lagerstellen 8.6 für die Antriebswelle 6 und Umlenkwelle 7 vorgesehen sind. Hierbei sind im Unterteil 8.1 und Oberteil 8.3 an Seitenwänden 8.7 halbkreisförmig ausgeschnittene oder ausgesparte Bereiche vorgesehen, welche die Lagerstellen 8.6 bilden. Dabei können die Seitenwände 8.7 in diesem Bereich verbreitert ausgebildet sein, so dass eine geringere Materialbelastung erfolgt. Ein aufgestecktes Seitenteil 3, wie bspw. in Fig. 1a dargestellt, kann entfallen, da die beiden Seitenwände 8.7, welche am Gehäuse 2 mit Unter- und Oberteilen 8.1 und 8.3 ausgebildet sind, dessen Funktion übernehmen.

Die beiden Wellen werden mit samt dem Rollband 5 in Richtung der beiden Pfeile von Fig. 12d in die unteren Lagerstellen 8.6 eingelegt. Anschließend werden die Oberteile 8.3 zugeschwenkt, so dass die oberen Lagerstellen 8.6 in Anlage an die Wellen gelangen. Die Verriegelung von Unter- und Oberteil erfolgt mittels einer an den Seitenwänden 8.7 vorgesehenen Clipsverbindung 8.8, wie insbesondere Fig. 12d entnommen werden kann. Zur Positionierung und verbesserten Kraftübertragung in radialer Richtung der Seitenwände 8.7 bezüglich der Lagerstellen 8.6 ist an den Seitenwänden 8.7 des Oberteils 8.3 eine Nase 8.9 vorgesehen, welche beim Schließen in eine entsprechende Aufnahme 8.10 gelangt, welche an den Seitenwänden 8.7 des Unterteils 8.1 ausgebildet ist.

## Patentansprüche

1. Rollbandkassette zur Verwendung in einer Steuereinrichtung (1) zum Steuern von Luftströmen in Kraftfahrzeugen, bestehend aus einer Rollbandbaugruppe mit einer von einem Rollband (5) gebildeten Rolljalousie und mindestens zwei Wellen (6; 7), wobei eine Welle eine Antriebswelle (6) und eine Welle eine Umlenkwelle (7) ist, wobei das Rollband (5) durch ein endloses Band gebildet oder in Art eines endlosen Bandes ausgebildet ist, **dadurch gekennzeichnet, dass** die Antriebswelle (6) mindestens zwei Teile (6.1 und 6.2) umfasst, wobei das Rollband (5) zwischen diesen beiden Teilen (6.1 und 6.2) eingeklemmt oder verschweißt ist.

2. Rollbandkassette nach Anspruch 1, **dadurch gekennzeichnet, dass** das Rollband (5) nur an einem Teilbereich des Außenumfangs der Antriebswelle (6) und der Umlenkwelle (7) anliegt.

3. Rollbandkassette nach einem der vorherigen Ansprüche, **dadurch gekennzeichnet, dass** beide Enden des endlosbandartigen oder ein zusammengelegter Bereich des endlosen Rollbandes (5) an der Antriebswelle (6) fixiert sind.

4. Rollbandkassette nach einem der vorherigen Ansprüche, **dadurch gekennzeichnet, dass** die beiden Teile (6.1 und 6.2) mittels einer Verclipsung oder einer Arretierung miteinander verbunden sind.

5. Rollbandkassette nach einem der vorherigen Ansprüche, **dadurch gekennzeichnet, dass** die beiden Teile (6.1 und 6.2) der Antriebswelle (6) im offenen Zustand über mindestens einen Verbindungssteg (6.4) miteinander flexibel verbunden sind.

6. Rollbandkassette nach einem der einem der vorherigen Ansprüche, **dadurch gekennzeichnet, dass** die beiden Teile (6.1 und 6.2) der Antriebswelle (6) einstückig gefertigt sind.

7. Rollbandkassette nach einem der einem der vorherigen Ansprüche, **dadurch gekennzeichnet, dass** zumindest einer der beiden Teile (6.1 und 6.2) der Antriebswelle (6) als Fixierstifte dienende Vorsprünge (6.5) aufweist, welche in im Rollband (5) vorgesehene Löcher (5.5) eingreifen.

8. Rollbandkassette nach einem der vorherigen Ansprüche, **dadurch gekennzeichnet, dass** das Rollband (5) zumindest bereichsweise mehrschichtig ausgebildet ist.

9. Rollbandkassette nach einem der vorherigen Ansprüche, **dadurch gekennzeichnet, dass** das Rollband (5) eine Metallschicht, insbesondere aus Aluminium, aufweist.

10. Rollbandkassette nach einem der vorherigen Ansprüche, **dadurch gekennzeichnet, dass** das Rollband (5) mit Öffnungen oder Ausschnitten (5.1) zur Freigabe des Durchtrittsquerschnittes (4) ausgebildet ist.

11. Rollbandkassette nach einem der vorherigen Ansprüche, **dadurch gekennzeichnet, dass** Rollband (5) zweilagig an der mindestens einen Durchtrittsöffnung (4) vorbeigeführt wird, wobei Öffnungen oder Ausschnitte (5.1) auf dem Rollband (5) so verteilt sind, dass bei einer geschlossenen Durchtrittsöffnung (4) jeweils eine Lage (5.3, 5.4) des Rollbandes (5) etwa die Hälfte der Durchtrittsöffnung (4) verdeckt, wobei beim Öffnen der Durchtrittsöffnung (4) sich die beiden Lagen (5.3, 5.4) des Rollbandes (5) in entgegengesetzter Richtung bewegen und die Durchtrittsöffnung (4) von der Mitte nach außen freigeben.

12. Rollbandkassette nach einem der vorherigen Ansprüche, **dadurch gekennzeichnet, dass** durch die Anordnung von Gitterstäben (4.1) die Rollbandkassette beidseitig mit Luft beaufschlagbar ist.

13. Rollbandkassette nach einem der vorherigen Ansprüche, **dadurch gekennzeichnet, dass** Ränder (5.6) von Öffnungen oder Ausschnitten (5.1) des Rollbandes (5) angeschrägt sind.

14. Rollbandkassette nach einem der vorherigen Ansprüche, **dadurch gekennzeichnet, dass** ein Stellmotor in die als Hohlwelle ausgebildete Antriebswelle (6) integriert ist.

15. Rollbandkassette nach einem der vorherigen Ansprüche, **dadurch gekennzeichnet, dass** die Umlenkwelle (7) und/oder die Antriebswelle (6) bombiert ist, um eine Faltenbildung des Rollbandes (5) zu vermeiden.

16. Heizungs- oder Klimaanlage mit einer Rollbandkassette nach einem der vorherigen Ansprüche 1 bis 15.

## Claims

1. A roller belt cassette for use in a control device (1) for controlling air flows in motor vehicles consisting of a roller belt sub-assembly having a roller blind formed by a roller belt (5) and at least two shafts (6; 7), one shaft being a drive shaft (6) and the other being a guide shaft (7), the roller belt (5) being either formed by an endless belt or designed as an endless belt,
**characterised in that**
the drive shaft (6) comprises at least two parts (6.1 and 6.2), the roller belt (5) being clamped or welded between these two parts (6.1 and 6.2).

2. A roller belt cassette in accordance with claim 1,
**characterised in that**
the roller belt (5) lies flat against only part of the outer circumferences of the drive shaft (6) and the guide shaft (7).

3. A roller belt cassette in accordance with one of the preceding claims,
**characterised in that**
either both ends of the endless-belt type roller belt (5) or a folded area of the endless roller belt (5) are fixed to the drive shaft.

4. A roller belt cassette in accordance with one of the preceding claims,
**characterised in that**
both parts (6.1 and 6.2) are joined together by means of a clip or a catch mechanism.

5. A roller belt cassette in accordance with one of the preceding claims,
**characterised in that**
in the open position both parts (6.1 and 6.2) of the drive shaft (6) are joined flexibly to one another by at least one connecting bar (6.4).

6. A roller belt cassette in accordance with one of the preceding claims,
**characterised in that**
both parts (6.1 and 6.2) of the drive shaft (6) are manufactured in one piece.

7. A roller belt cassette in accordance with one of the preceding claims,
**characterised in that**
at least one of the two parts (6.1 and 6.2) of the drive shaft (6) have projections (6.5) which serve as positioning pins and which engage in holes (5.5) provided in the roller belt (5).

8. A roller belt cassette in accordance with one of the preceding claims,
**characterised in that**
the roller belt (5) is multi-layered in at least certain areas.

9. A roller belt cassette in accordance with one of the preceding claims,
**characterised in that**
the roller belt (5) has a metal layer, in particular made of aluminium.

10. A roller belt cassette in accordance with one of the preceding claims,
**characterised in that**
the roller belt (5) is designed with openings or cut-outs (5.1) which uncover the through-cross section (4).

11. A roller belt cassette in accordance with one of the preceding claims,
**characterised in that**
the roller belt (5) passes in two layers over the at least one through-opening (4), openings or cut-outs (5.1) being distributed over the roller belt (5) in such a manner that when a through-opening (4) is closed one layer (5.3, 5.4) of the roller belt (5) covers approximately half of the through-opening (4) and when the through-opening (4) is opened the two layers (5.3, 5.4) of the roller belt (5) move in opposite directions and uncover the through-opening (4) from the centre outwards.

12. A roller belt cassette in accordance with one of the preceding claims,
**characterised in that**
the arrangement of the lattice bars (4.1) means that air can be applied to the roller belt cassette on both sides.

13. A roller belt cassette in accordance with one of the preceding claims,
**characterised in that**
the edges (5.6) of openings or cut-outs (5.1) in the roller belt (5) are angled.

14. A roller belt cassette in accordance with one of the preceding claims,
**characterised in that**
a servomotor is integrated into the drive haft (6) which is designed as a hollow shaft.

15. A roller belt cassette in accordance with one of the preceding claims,
**characterised in that**
the guide shaft (7) and/or the drive shaft (6) is cambered in order to prevent folds forming in the roller belt (5).

16. A heating or air conditioning system having a roller belt cassette in accordance with one of the preceding claims 1 to 16.

## Revendications

1. Coffret de bande enroulée pour l'utilisation dans un dispositif de commande (1) servant à la régulation de flux d'air dans des véhicules automobiles, se composant d'un ensemble de bande enroulée comprenant un rideau enroulé formé par une bande enroulée (5) et au moins deux arbres (6, 7), où un arbre est un arbre d'entraînement (6), et un arbre est un arbre de renvoi (7), où la bande enroulée (5) est formée par une bande sans fin ou configurée à la façon d'une bande sans fin, **caractérisé en ce que** l'arbre d'entraînement (6) comprend au moins deux parties (6.1 et 6.2), où la bande enroulée (5) est encastrée ou soudée entre ces deux parties (6.1 et 6.2).

2. Coffret de bande enroulée selon la revendication 1, **caractérisé en ce que** la bande enroulée (5) s'applique seulement sur une zone partielle de la circonférence extérieure de l'arbre d'entraînement (6) et de l'arbre de renvoi (7).

3. Coffret de bande enroulée selon l'une ou l'autre des revendications précédentes, **caractérisé en ce que** les deux extrémités de la bande enroulée (5), à la façon d'une bande sans fin, ou bien une zone assemblée de la bande sans fin, enroulée, est ou sont fixée(s) sur l'arbre d'entraînement (6).

4. Coffret de bande enroulée selon l'une quelconque des revendications précédentes,
**caractérisé en ce que** les deux parties (6.1 et 6.2) sont assemblées l'une à l'autre, par clipsage ou par un dispositif de blocage.

5. Coffret de bande enroulée selon l'une quelconque des revendications précédentes, **caractérisé en ce que** les deux parties (6.1 et 6.2) de l'arbre d'entraînement (6) sont, à l'état ouvert, reliées l'une à l'autre de manière flexible, par au moins un élément de raccordement (6.4).

6. Coffret de bande enroulée selon l'une quelconque des revendications précédentes, **caractérisé en ce que** les deux parties (6.1 et 6.2) de l'arbre d'entraînement (6) sont fabriquées en formant une seule et même pièce.

7. Coffret de bande enroulée selon l'une quelconque des revendications précédentes, **caractérisé en ce qu'**au moins l'une des deux parties (6.1 et 6.2) de l'arbre d'entraînement (6) présente des parties saillantes (6.5) servant de goupilles de fixation qui s'engagent dans des trous (5.5) prévus dans la bande enroulée (5).

8. Coffret de bande enroulée selon l'une quelconque des revendications précédentes, **caractérisé en ce que** la bande enroulée (5) est configurée, au moins par zones, de manière multicouche.

9. Coffret de bande enroulée selon l'une quelconque des revendications précédentes, **caractérisé en ce que** la bande enroulée (5) présente une couche métallique, en particulier en aluminium.

10. Coffret de bande enroulée selon l'une quelconque des revendications précédentes, **caractérisé en ce que** la bande enroulée (5) est configurée en comportant des ouvertures ou des découpes (5.1) servant à dégager la section de passage (4).

11. Coffret de bande enroulée selon l'une quelconque des revendications précédentes, **caractérisé en ce que** la bande enroulée (5), comportant deux couches, est guidée en passant devant l'ouverture de passage (4) au moins au nombre de un, où des ouvertures ou des découpes (5.1) sont réparties sur la bande enroulée (5), de manière telle que lorsqu'une ouverture de passage (4) est fermée, une couche (5.3, 5.4) de la bande enroulée (5) recouvre à chaque fois à peu près la moitié de l'ouverture de passage (4), où lorsque l'ouverture de passage (4) s'ouvre, les deux couches (5.3, 5.4) de la bande enroulée (5) se déplacent en sens opposé et dégagent l'ouverture de passage (4), depuis le milieu vers l'extérieur.

12. Coffret de bande enroulée selon l'une quelconque des revendications précédentes, **caractérisé en ce que** grâce à l'agencement de barres de grille (4.1), le coffret de bande enroulée peut, des deux côtés, être alimenté avec de l'air.

13. Coffret de bande enroulée selon l'une quelconque des revendications précédentes, **caractérisé en ce que** des bords (5.6) d'ouvertures ou de découpes (5.1) de la bande enroulée (5) sont chanfreinés.

14. Coffret de bande enroulée selon l'une quelconque des revendications précédentes, **caractérisé en ce qu'**un servomoteur est intégré à l'arbre d'entraînement (6) conçu comme un arbre creux.

15. Coffret de bande enroulée selon l'une quelconque des revendications précédentes, **caractérisé en ce que** l'arbre de renvoi (7) et / ou l'arbre d'entraînement (6) est bombé, pour éviter une formation de plis de la bande enroulée (5).

16. Système de chauffage ou de climatisation comprenant un coffret de bande enroulée selon l'une quelconque des revendications précédentes 1 à 15.
